# EUROPEAN PATENT APPLICATION

(11) **EP 4 525 364 A1**
(43) Date of publication of application: **19.03.2025**
(21) Application number: 23834525.0
(22) Date of filing: 22.05.2023
(51) Int. Cl.: H04L 9/40

(54) **NETWORK ACCESS CONTROL METHOD, AND CUSTOMER PREMISE EQUIPMENT AND STORAGE MEDIUM**

(30) Priority: 08.07.2022 CN 202210801415
(71) Applicant: ZTE Corporation, Shenzhen, Guangdong 518057 (CN)
(72) Inventor: GAO, Fei, Shenzhen, Guangdong 518057 (CN); CHE, Zhonghui, Shenzhen, Guangdong 518057 (CN); MA, Xiaoliang, Shenzhen, Guangdong 518057 (CN)
(74) Representative: Savi, Massimiliano
(86) International application number: PCT/CN2023/095550
(87) International publication number: WO 2024/007751

(57) **Abstract**

Disclosed in the present application are a network access control method, and a customer premise equipment and a storage medium. The network access control method comprises: a customer premise equipment receiving a network address application request sent by a client device, and allocating a client network address to the client device, wherein the client network address is a network address pre-bound to the client device (S210); receiving an access request for a network-side device to access the client device (S220); and sending the client network address to the network-side device according to the access request (S230).

## Description

### CROSS-REFERENCE TO RELATED APPLICATION

This application is filed on the basis of Chinese patent application No. 202210801415.3 filed July 8, 2022, and claims priority to the Chinese patent application, the entire contents of which are incorporated herein by reference.

### TECHNICAL FIELD

The present disclosure relates to the technical field of data communication, and more particularly, to a network access control method, a Customer Premise Equipment (CPE), and a storage medium.

### BACKGROUND

CPE (Customer Premises Equipment) is an essential product in Mobile Broadband (MBB) products. CPEs such as portable Wireless Fidelity (Wi-Fi) router and data cards provide, as data channel products, a network access service for downstream devices, enabling the downstream devices to actively access Internet resources and allowing Internet users to access downstream devices connected to CPEs and services provided by the downstream devices.

In the related technology, in a scenario in which an Internet user accesses a downstream device of a CPE, a conventional practice is to change a destination Internet Protocol (IP) address of a packet from the Internet to a private IP address of a Local Area Network (LAN) host by a Network Address Translation (NAT) method within the CPE. Conventional NAT operations are feasible in scenarios where a core network assigns public addresses to CPEs, but are not applicable to scenarios where a network (such as China's three major telecom operators, i.e., China Mobile, China Unicom, and China Telecom) assigns private IP addresses to CPEs. In addition, the additional NAT operations also increase the processing load of the CPEs, leading to inefficient network data access and unsatisfactory user experience. Consequently, there is an urgent need to expand application scenarios of Internet users accessing downstream devices of CPEs, to enhance the efficiency of network-side users accessing clients, and to improve overall user experience.

### SUMMARY

Embodiments of the present disclosure provide a network access control method, a CPE, and a storage medium.

In accordance with a first aspect of the present disclosure, an embodiment provides a network access control method, including: receiving a network address application request sent by a client device, and assigning a client network address to the client device, where the client network address is a network address pre-bound to the client device; receiving, from a network-side device, an access request for accessing the client device; and sending the client network address to the network-side device according to the access request.

In accordance with a second aspect of the present disclosure, an embodiment provides a CPE, including: a memory, a processor, and a computer program stored in the memory and executable by the processor, where the computer program, when executed by the processor, causes the processor to implement the network access control method in accordance with the first aspect.

In accordance with a third aspect of the present disclosure, an embodiment provides a computer-readable storage medium, storing computer-executable instructions which, when executed by a processor, cause the processor to implement the network access control method described above.

### BRIEF DESCRIPTION OF DRAWINGS

FIG. 1 is a schematic diagram of functional modules of a CPE according to an embodiment of the present disclosure;
FIG. 2 is a schematic flowchart of a network access control method according to an embodiment of the present disclosure;
FIG. 3 is a schematic flowchart of binding device information to network address information in a network access control method according to another embodiment of the present disclosure;
FIG. 4 is a schematic flowchart of S210 in FIG. 2;
FIG. 5 is a schematic flowchart of binding a dynamic network address to a fixed domain name in a network access control method according to another embodiment of the present disclosure;
FIG. 6 is a schematic diagram of a working scenario of a CPE according to an embodiment of the present disclosure; and
FIG. 7 is a schematic block diagram of a CPE according to an embodiment of the present disclosure.

### DETAILED DESCRIPTION

To make the objects, technical schemes, and advantages of the present disclosure clear, the present disclosure is described in further detail in conjunction with accompanying drawings and examples. It should be understood that the specific embodiments described herein are merely used for illustrating the present disclosure, and are not intended to limit the present disclosure.

It is to be noted, although functional modules have been divided in the schematic diagrams of systems and logical orders have been shown in the flowcharts, in some cases, the modules may be divided in a different manner, or the steps shown or described may be executed in an order different from the orders as shown in the flowcharts. The terms such as "first", "second" and the like in the description, the claims, and the accompanying drawings are used to distinguish similar objects, and are not necessarily used to describe a specific sequence or a precedence order.

With the rapid development of the Internet, especially the rapid development and popularization of 3G/4G and Wireless Local Area Network (WLAN) services, a CPE, as a portable communication terminal, can provide a network access function for one or more client devices. It can be understood that a CPE may be referred to as a customer premises equipment, a customer-premises equipment, a customer-provided equipment, etc. As used herein, "customer premises equipment" refers to a CPE. A CPE refers to hardware physically located at a customer's site, such as communication hardware (e.g., Channel Service Unit/Data Service Unit (CSU/DSU) and modems), LAN devices (e.g., hubs, bridges, and switches), and WAN devices (e.g., routers), etc. The type of the CPE is not limited in the present disclosure.

The present disclosure provides a network access control method, a CPE, and a computer-readable storage medium. In the network access control method, first, a CPE receives a network address application request sent by a client device. Next, the CPE assigns a client network address to the client device, where the client network address is a network address pre-bound to the client device. Then, the CPE receives, from a network-side device, an access request for accessing the client device. Finally, the CPE sends the client network address to the network-side device according to the access request. The network address pre-bound to the client device, i.e., the client network address, is sent to the network-side device to ensure that the network-side device accesses the corresponding client device according to the client network address, thereby improving the efficiency and success rate of the network-side user accessing the client device, and improving user experience.

The embodiments of the present disclosure will be described in detail below in conjunction with the accompanying drawings.

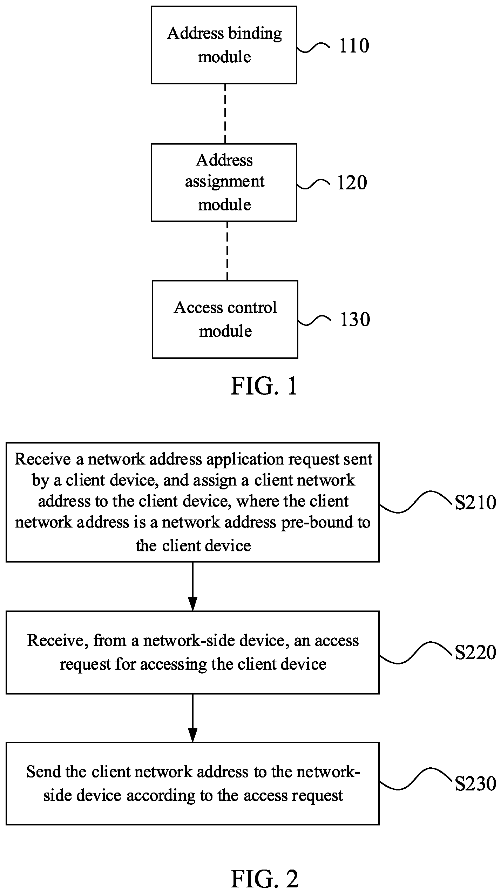

FIG. 1 is a schematic diagram of functional modules of a CPE according to an embodiment of the present disclosure. The CPE includes an address binding module 110, an address assignment module 120, and an access control module 130. The address assignment module 120 is in communication connection with the address binding module 110 and the access control module 130, respectively.

The address binding module 110 is configured for binding a physical address of a client device on a LAN side to a network address, where the binding includes Internet Protocol Version 4 (IPv4) address binding and Internet Protocol Version 6 (IPv6) address binding. In some embodiments, the address binding module 110 acquires in advance device information of the client device and network address information that the client device expects to acquire; and performs address binding configuration processing on the device information and the network address information according to a preset address binding rule. The device information of the client device includes a Media Access Control (MAC) address, which is also referred to as a physical address. The device information of the client device further includes a unique device identifier (e.g., DHCPv6 Unique Identifier (DUID)). DHCPv6 is a network protocol for configuring an IP address, an IP prefix, and/or other configurations required by an IPv6 host operating on an IPv6 network. The unique device identifier is used for identifying the IPv6 host operating on the IPv6 network.

The address assignment module 120 is configured for assigning a client network address to the client device on the LAN side, where the assigned client network address includes at least one of: an IPv4 private address, an IPv4 public address, and an IPv6 address. In some embodiments, the address assignment module 120 receives a network address application request sent by a client device, and assigns a client network address to the client device, where the client network address is a network address pre-bound to the client device.

The access control module 130 is configured for providing access control for an access of a network-side user to the client device on the LAN side. In some embodiments, the access control module 130 receives an access request from the network-side device, where the access request represents a request for accessing the client device, and then the access control module 130 sends a client network address to the network-side device according to the access request to ensure that the network-side device accesses the client device according to the client network address.

It can be understood that the functions of the modules in the embodiment of the present disclosure may also be realized by the control of a main control chip of the CPE, but a logical relationship based on which the main control chip implements the corresponding functions is the same as that of the modules, so this is not to be construed as a difference from the embodiment of the present disclosure, and any hardware functional structure configured based on the same logical relationship as that of the embodiment of the present disclosure falls within the scope of protection of the present disclosure.

According to an embodiment of the present disclosure, in the CPE, the address binding module 110 first acquires in advance device information of the client device and network address information that the client device expects to acquire; and performs address binding configuration processing on the device information and the network address information according to a preset address binding rule. Next, the address assignment module 120 of the CPE receives a network address application request sent by a client device. Then, the address assignment module 120 assigns a client network address to the client device, where the client network address is a network address pre-bound to the client device. Afterward, the access control module 130 of the CPE receives, from a network-side device, an access request for accessing the client device. Finally, the access control module 130 of the CPE sends the client network address to the network-side device according to the access request. The network address pre-bound to the client device, i.e., the client network address, is sent to the network-side device to ensure that the network-side device accesses the corresponding client device according to the client network address, thereby improving the efficiency and success rate of the network-side user accessing the client device, and improving user experience.

It can be understood that the functional modules of the system and application scenarios described in the embodiments of the present disclosure are for the purpose of illustrating the technical schemes of the embodiments of the present disclosure more clearly, and do not constitute a limitation on the technical schemes provided in the embodiments of the present disclosure. Those having ordinary skills in the art may know that with the evolution of the functional modules of the system and the emergence of new application scenarios, the technical schemes provided in the embodiments of the present disclosure are also applicable to similar technical problems. Those having ordinary skills in the art may understand that the functional modules of the CPE shown in FIG. 1 do not constitute a limitation to the embodiments of the present disclosure, and the CPE may include more or fewer modules than those shown in the figure, or some modules may be combined, or a different module arrangement may be used.

Embodiments of the network access control method of the present disclosure are proposed below based on the above CPE.

FIG. 2 is a schematic flowchart of a network access control method according to an embodiment of the present disclosure. The network access control method may include, but not limited to, the following steps S210, S220, and S230.

At S210, a network address application request sent by a client device is received, and a client network address is assigned to the client device, where the client network address is a network address pre-bound to the client device.

At S220, an access request for accessing the client device is received from a network-side device.

At S230, the client network address is sent to the network-side device according to the access request.

In an embodiment of the present disclosure, by the network access control method including the above steps S210 to S230, a CPE receives a network address application request sent by a client device, and then assigns a client network address to the client device, where the client network address is a network address pre-bound to the client device. Then, the CPE receives, from a network-side device, an access request for accessing the client device. Finally, the CPE sends the client network address to the network-side device according to the access request. In this way, it is ensured that the network-side device accesses the corresponding client device according to the client network address, thereby improving the efficiency and success rate of the network-side user accessing the client device, and improving user experience.

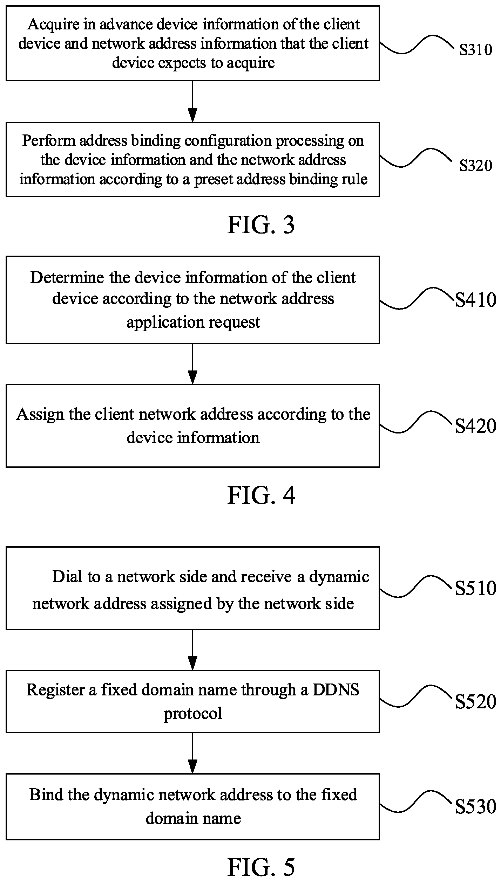

FIG. 3 is a schematic flowchart of binding device information to network address information in a network access control method according to another embodiment of the present disclosure. Before S210 of receiving a network address application request sent by a client device and assigning a client network address to the client device, wherein the client network address is a network address pre-bound to the client device, the network access control method further includes the following steps S310 and S320.

At S310, device information of the client device and network address information that the client device expects to acquire are acquired in advance.

In this step, the CPE acquires in advance device information of the client device and network address information that the client device expects to acquire. It can be understood that device information has been set for each device before delivery from the factory. Different client devices have different device information. In the present disclosure, the device information of the client device includes a MAC address, i.e., a physical address. The device information of the client device may also include a unique device identifier, e.g., a DUID. The unique device identifier is used for identifying an IPv6 host operating on an IPv6 network.

In some embodiments, the CPE opens a setting page for the user, and the user can log in to the setting page to input information. The user may input, to the setting page, a physical address of a client device and an IPv4 address to which the client device is to be bound. The user may also input a physical address or DUID of a client device and an IPv6 interface identifier to which the client device is to be bound. The CPE may receive, through a manual configuration mode, the device information of the client device and the network address information that the client device expects to acquire. The advantage of the manual configuration mode lies in that a client device may be added or removed, which is convenient for managing the CPE.

At S320, address binding configuration processing is performed on the device information and the network address information according to a preset address binding rule.

In this step, the CPE performs address binding configuration processing on the device information and the network address information according to a preset address binding rule. Through the address binding configuration processing, a corresponding binding relationship between the device information and the network address information is obtained. Since it is necessary to learn the network address of the client device on the LAN side to transmit a data packet sent by the network-side device to the client device on the LAN side, the CPE binds the client device information to the network address in the present disclosure. The CPE provides a function of binding the device information to an IPv4 address or an IPv6 interface identifier, such that the user (i.e., the client device) can be tracked.

In some embodiments, the device information includes a physical address or a unique device identifier, and the network address information includes an IPv4 address or an IPv6 interface identifier. In an embodiment of the present disclosure, S320 of performing address binding configuration processing on the device information and the network address information according to a preset address binding rule further includes: binding the physical address to the IPv4 address when the network address information includes the IPv4 address; or binding the physical address to the IPv6 interface identifier or binding the unique device identifier to the IPv6 interface identifier when the network address information includes the IPv6 interface identifier. In some embodiments, the address binding configuration processing performed by the CPE is as follows: when the network address information includes the IPv4 address, the CPE binds the received physical address to the IPv4 address; or when the network address information includes the IPv6 interface identifier, the CPE binds the physical address to the IPv6 interface identifier or binds the unique device identifier to the IPv6 interface identifier. After the device information and the network address information are bound, the target terminal device generates and records a corresponding binding relationship between the device information of the client device and the network address information that the client device expects to acquire.

FIG. 4 is a schematic flowchart of S210 in FIG. 2. S210 of receiving a network address application request sent by a client device and assigning a client network address to the client device, wherein the client network address is a network address pre-bound to the client deviceincludes, but not limited to, the following steps S410 and S420.

At S410, the device information of the client device is determined according to the network address application request.

In this step, the CPE determines the device information of the client device according to the network address application request. In some embodiments, the network address application request sent by the client device carries the device information of the client device, and the device information may be a physical address or a unique device identifier.

At S420, the client network address is assigned according to the device information.

In this step, the CPE assigns the client network address according to the device information, where the client network address includes at least one of: an IPv6 address, an IPv4 public address, or an IPv4 private address. In some embodiments, after acquiring the device information, the CPE checks, according to the configured preset address binding rule, whether the acquired device information has been pre-bound to a network address, and if the device information of the client device has been pre-bound to a network address, assigns the pre-bound client network address to the client device according to the preset address binding rule.

In an embodiment of the present disclosure, S420 of assigning the client network address according to the device information includes: assigning the IPv4 public address to the client device corresponding to the physical address when detecting that the client device is connected to an IPv4 public address assignment network port, or assigning the IPv4 private address to the client device corresponding to the physical address when not detecting that the client device is connected to the IPv4 public address assignment network port; or binding a currently acquired IPv6 network prefix to the IPv6 interface identifier to generate an IPv6 address, and assigning the IPv6 address to the client device corresponding to the physical address or the unique device identifier.

In some embodiments, through the processing of S320, a corresponding binding relationship between the device information of the client device and the network address information that the client device expects to acquire is obtained. The client network address is assigned to the client device according to the corresponding binding relationship. During IPv6 address assignment, the CPE first acquires an IPv6 network prefix, then binds the acquired IPv6 network prefix to the IPv6 interface identifier to generate an IPv6 address, obtains, according to the preset address binding rule, a physical address or a unique device identifier bound to the IPv6 interface identifier, and assigns the IPv6 address to a client device corresponding to the physical address or the unique device identifier.

It can be understood that during IPv6 address assignment, the CPE may directly assign an IPv6 address to the client, and during IPv4 address assignment, the CPE may assign an IPv4 public address or an IPv4 private address to the user. Therefore, during IPv4 address assignment, it is also necessary to acquire an access status of the client device, and determine to assign an IPv4 public address or an IPv4 private address to the client device according to the access status.

In some embodiments, during IPv4 address assignment, the CPE also needs to acquire the access status of the client device. To be specific, the CPE assigns the IPv4 public address to the client device corresponding to the physical address when detecting that the client device is connected to an IPv4 public address assignment network port, or the CPE assigns the IPv4 private address to the client device corresponding to the physical address when not detecting that the client device is connected to the IPv4 public address assignment network port. In an embodiment, if the CPE supports assigning an IPv4 public address to the client and the client device requires acquiring an IPv4 public address, the client is connected to a specific network port (e.g., a network port labeled with WAN/LAN1 on a mechanical part), and in this case, an IPv4 public address is assigned to the client; otherwise, the CPE assigns an IPv4 private address to the client. For example, there are a plurality of Ethernet ports on the CPE, and the leftmost Ethernet port near a power supply may be assigned an IPv4 public address. If a client device is connected to this Ethernet port, the client device is assigned an IPv4 public address. If a client device is not connected to this Ethernet port, but is connected to another interface, the client device is assigned an IPv4 private address.

When the client device is assigned an IPv4 public address or an IPv6 address, the network-side device may directly access the client device according to the IPv4 public address or the IPv6 address to implement data access. However, when the client device is assigned an IPv4 private address, the network-side device cannot directly access the client device directly according to the IPv4 private address. In an embodiment, a destination network address translation rule is configured when the assigned client network address is the IPv4 private address. In some embodiments, when the assigned client network address is an IPv4 private address, a Destination Network Address Translation (DNAT) rule is configured in the CPE to ensure that the CPE, when receiving a packet sent by the network side, performs address translation on a destination address in the packet to replace the destination address with the IPv4 private address assigned to the client device, forwards and the packet to the client device on the LAN side.

In an embodiment, after the CPE assigns a client network address to the client device according to the network address application request, the method further includes: recording the client network address on a management page; or binding the client network address to two-dimensional code information. A two-dimensional code picture carrying the two-dimensional code information may be saved to a mobile phone, and the user on the network side can acquire the client network address bound to the two-dimensional code information by simply acquiring the two-dimensional code picture. The CPE binds the client network address with the two-dimensional code technology, allowing the user to achieve convenient mobile access.

FIG. 5 is a schematic flowchart of binding a dynamic network address to a fixed domain name in a network access control method according to another embodiment of the present disclosure. Before S210 of receiving a network address application request sent by a client device, the method includes, but not limited to, the following steps S510, S520, and S530.

At S510, a network side is dialed to and a dynamic network address assigned by the network side is received.

In this step, the CPE dials to a network side and receives a dynamic network address assigned by the network side. In some embodiments, after the CPE is powered on, the CPE performs 5G/LTE dialing to the network side to obtain a dynamic network address assigned by the network side, where the dynamic network address includes an IPv4 address and an IPv6 address. The IPv4 address may be an IPv4 private address or an IPv4 public address.

At S520, a fixed domain name is registered through a Dynamic Domain Name Server (DDNS) protocol.

In this step, the CPE registers a fixed domain name through a DDNS protocol. It can be understood that every time the CPE performs 5G/LTE dialing, the IPv4 address and IPv6 address assigned by the network side will change. Therefore, the CPE needs to configure and register DDNS information, and register a fixed domain name according to the DDNS protocol.

At S530, the dynamic network address is bound to the fixed domain name.

In this step, the CPE binds the dynamic network address to the fixed domain name. In some embodiments, after obtaining the fixed domain name, the CPE binds the dynamic network address to the fixed domain name, to provide a domain name access service for Internet users, making it convenient for the user to access. The IPv4 address and the IPv6 address assigned by the network side will change after every 5G/LTE dial, and when the dynamic network address assigned to the CPE is a private IP address, the CPE cannot not be accessed. Based on the dynamic network address, the network-side user may not be successful in accessing the CPE. Therefore, the CPE registers a domain name through the DDNS protocol, and binds the dynamic network address to the fixed domain name, making it convenient for the user to access. In this way, it is ensured that the CPE can be accessed by a network-side user regardless of whether the address assigned to the CPE is a public IP address or a private IP address, thereby improving the success rate of the network-side user accessing the CPE.

In an embodiment of the present disclosure, with the network access control method including the above steps S510 to S530, the CPE dials to the network side and receives a dynamic network address assigned by the network side. Then, the CPE registers a fixed domain name through a DDNS protocol, and binds the dynamic network address to the fixed domain name. Because the dynamic address is bound to the fixed domain name using the DDNS technology, the network-side user can access the fixed domain name by simply accessing the destination address, thereby solving the problem that the CPE cannot be accessed when the network address assigned to the CPE is a private IP address.

It can be understood that only after obtaining the client network address, the network-side user can access the corresponding client device according to the client network address. Therefore, to make it convenient for the network-side user to access a service provided by the client device connected to the CPE, embodiments of the present disclosure provide the network-side user with a method for acquiring the client network address. Three methods for the user to acquire the network address to be accessed are provided below.

First, when the CPE records the client network address on the management page, and the CPE has registered a domain name through the DDNS protocol and has bound a dynamic network address to the fixed domain name, the user may access the fixed domain name registered by the CPE to open the management page of the CPE to acquire the client network address, and then access the client according to the client network address. If the acquired client network address is an IPv4 public address or an IPv6 address, the network-side user can directly access the IPv4 public address or the IPv6 address for data access. If the acquired client network address is an IPv4 private address, the CPE needs to perform DNAT processing to achieve access.

Second, to facilitate an access by the user, the CPE provides the user with a two-dimensional code service on a mechanical part of the product, and the user automatically enters the management page of the CPE by scanning the two-dimensional code. When the two-dimensional code is scanned, a background program automatically accesses the fixed domain name provided by the CPE to open the management page. After a management interface is entered, the management page provides a large amount of information. The user may acquire the client network address through the management page.

Third, to facilitate an access by the user, when the CPE binds the client network address to the two-dimensional code information, the CPE may provide a two-dimensional code service to the user on a mechanical part of the product. After the user scans the two-dimensional code, only a client network address is returned. The returned client network address is a client network address of a client device providing external services. Information acquired in this way is the most intuitive.

It can be understood that the method for the network-side user to acquire the client network address is not limited to the above three methods. The method for the network-side user to acquire the client network address is not particularly limited in the present disclosure.

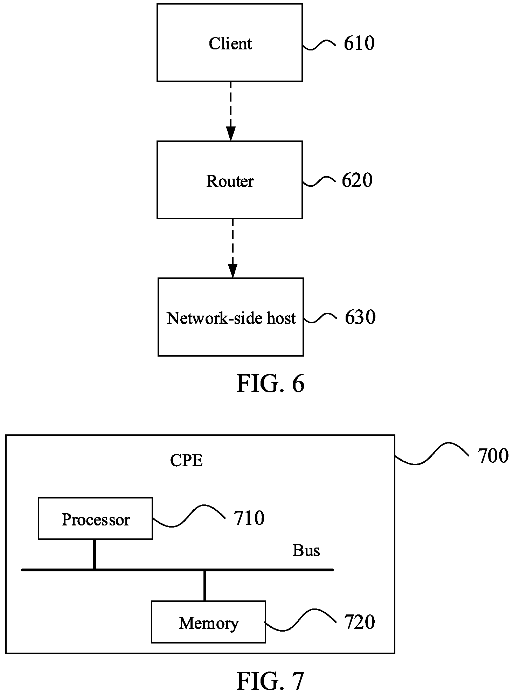

FIG. 6 is a schematic diagram of a working scenario of a CPE according to an embodiment of the present disclosure. In the example of FIG. 6, a client 610 is connected to a router 620 through a network cable or Wi-Fi, and the router 620 is in communication connection with a network-side host 630. First, a binding relationship between device information of the client 610 and an IPv4 address and an IPv6 interface identifier is configured on the router 620. After the router 620 successfully dials, if the router 620 can provide an IPv4 public address to the client 610, the router 620 directly assigns the public address to an IPv4 client, and the network-side host 630 directly accesses the IPv4 host to perform a data access service with the client 610. If the router 620 can only assign an IPv4 private address to the client 610, the router 620 needs to configure a DNAT rule, perform destination network address translation processing on a packet sent by the network-side host 630, and send the processed packet to the client 610 on the LAN side. If the router 620 can provide an IPv6 service to the client 610, the router 620 assigns a bound IPv6 address to the client 610, and the network-side host 630 directly accesses the client according to the IPv6 address.

According to an embodiment of the present disclosure, a CPE receives a network address application request sent by a client device, assigns a pre-bound client network address to the client device, and when receiving an access request from the network-side device, sends the client network address to the network-side device. In this way, the client network address can be sent to the network-side device to ensure that the network-side device accesses the corresponding client device according to the client network address. It can be understood that the client network address assigned to the client device may be an IPv6 address, an IPv4 public address, or an IPv4 private address. When the client network address assigned to the client device is an IPv6 address or an IPv4 public address, the network-side user can directly access the IPv6 address or the IPv4 public address to implement data access, thereby improving the efficiency of the network-side user accessing the client device. In addition, the IPv6 access mode can avoid the problem that the network-side device cannot access the CPE when an IPv4 address assigned by an operator network to the CPE is a private address. Through the domain name binding service, it is ensured that the network-side device can access the CPE according to the fixed domain name, thereby improving the efficiency and success rate of the network-side device acquiring the client network address and accessing the client device, and improving user experience.

FIG. 7 is a schematic block diagram of a CPE according to an embodiment of the present disclosure. The CPE 700 according to the embodiment of the present disclosure includes one or more processors 710 and one or more memories 720. FIG. 7 uses one processor 710 and one memory 720 as an example. The processor 710 and the memory 720 may be connected by a bus or in other ways. Connection by a bus is used as an example in FIG. 7.

The memory 720, as a non-transitory computer-readable storage medium, may be configured for storing a non-transitory software program and a non-transitory computer-executable program. In addition, the memory 720 may include a high-speed random access memory, and may also include a non-transitory memory, e.g., at least one magnetic disk storage device, flash memory device, or other non-transitory solid-state storage device. In some implementations, the memory 720 includes memories 720 located remotely from the processor 710, and the remote memories 720 may be connected to the CPE 700 via a network. Examples of the network include, but not limited to, the Internet, an intranet, a local area network, a mobile communication network, and combinations thereof.

Those having ordinary skills in the art may understand that the apparatus structure shown in FIG. 7 does not constitute a limitation to the CPE 700, and the route computation apparatus may include more or fewer components than those shown in the figure, or some components may be combined, or a different component arrangement may be used.

The non-transitory software program and instructions required to implement the network access control method applied to the CPE 700 of the foregoing embodiments are stored in the memory 720 which, when executed by the processor 710, cause the processor 710 to implement the network access control method applied to the CPE 700 of the foregoing embodiments, for example, implement the method steps S210 to S230 in FIG. 2, the method steps S310 to S320 in FIG. 3, the method steps S410 to S420 in FIG. 4, and the method steps S510 to S530 in FIG. 5.

The apparatus embodiments described above are merely examples. The units described as separate components may or may not be physically separated, i.e., they may be located in one place or may be distributed over a plurality of network units. Some or all of the modules may be selected according to actual needs to achieve the objects of the scheme of this embodiment.

In addition, an embodiment of the present disclosure provides a computer-readable storage medium, storing computer-executable instructions which, when executed by one or more processors, for example, by one or more processors 710 in FIG. 7, may cause the one or more processors 710 to implement the method in the above method embodiments, for example, implement the method steps S210 to S230 in FIG. 2, the method steps S310 to S320 in FIG. 3, the method steps S410 to S420 in FIG. 4, and the method steps S510 to S530 in FIG. 5.

An embodiment of the present disclosure includes the following operations. A CPE receives a network address application request sent by a client device, and assigns a client network address to the client device, where the client network address is a network address pre-bound to the client device; receives, from a network-side device, an access request for accessing the client device; and sends the client network address to the network-side device according to the access request. According to the scheme of the embodiment of the present disclosure, a CPE receives a network address application request sent by a client device. Next, the CPE assigns a client network address to the client device, where the client network address is a network address pre-bound to the client device. Then, the CPE receives, from a network-side device, an access request for accessing the client device. Finally, the CPE sends the client network address to the network-side device according to the access request. In other words, according to the scheme of the embodiment of the present disclosure, the network address pre-bound to the client device, i.e., the client network address, can be sent to the network-side device to ensure that the network-side device accesses the corresponding client device according to the client network address, thereby improving the efficiency and success rate of the network-side user accessing the client device, and improving user experience.

Those having ordinary skills in the art can understand that all or some of the steps in the methods disclosed above and the functional modules/units in the system and the apparatus can be implemented as software, firmware, hardware, and appropriate combinations thereof. Some or all physical components may be implemented as software executed by a processor, such as a central processing unit, a digital signal processor, or a microprocessor, or as hardware, or as an integrated circuit, such as an application-specific integrated circuit. Such software may be distributed on a computer-readable medium, which may include a computer storage medium (or non-transitory medium) and a communication medium (or transitory medium). As is known to those having ordinary skills in the art, the term "computer storage medium" includes volatile and nonvolatile, removable and non-removable media implemented in any method or technology for storage of information (such as computer-readable instructions, data structures, program modules, or other data). The computer storage medium includes, but not limited to, a Random Access Memory (RAM), a Read-Only Memory (ROM), an Electrically Erasable Programmable Read-Only Memory (EEPROM), a flash memory or other memory technology, a Compact Disc Read-Only Memory (CD-ROM), a Digital Versatile Disc (DVD) or other optical storage, a cassette, a magnetic tape, a magnetic disk storage or other magnetic storage device, or any other medium which can be used to store the desired information and can be accessed by a computer. In addition, as is known to those having ordinary skills in the art, the communication medium typically includes computer-readable instructions, data structures, program modules, or other data in a modulated data signal such as a carrier or other transport mechanism, and can include any information delivery medium.

## Claims

1. A network access control method, comprising:
receiving a network address application request sent by a client device, and assigning a client network address to the client device, wherein the client network address is a network address pre-bound to the client device;
receiving, from a network-side device, an access request for accessing the client device; and
sending the client network address to the network-side device according to the access request.

2. The network access control method of claim 1, wherein before receiving a network address application request sent by a client device, the method further comprises:
acquiring in advance device information of the client device and network address information that the client device expects to acquire; and
performing address binding configuration processing on the device information and the network address information according to a preset address binding rule.

3. The network access control method of claim 2, wherein the device information comprises a physical address or a unique device identifier, the network address information comprises an Internet Protocol Version 4 (IPv4) address or an Internet Protocol Version 6 (IPv6) interface identifier, and performing address binding configuration processing on the device information and the network address information according to a preset address binding rule comprises:
binding the physical address to the IPv4 address in response to the network address information comprising the IPv4 address; or
binding the physical address to the IPv6 interface identifier or binding the unique device identifier to the IPv6 interface identifier in response to the network address information comprising the IPv6 interface identifier.

4. The network access control method of claim 3, wherein assigning a client network address to the client device comprises:
determining the device information of the client device according to the network address application request; and
assigning the client network address according to the device information, wherein the client network address comprises at least one of: an IPv6 address, an IPv4 public address, or an IPv4 private address.

5. The network access control method of claim 4, wherein assigning the client network address according to the device information comprises:
assigning the IPv4 public address to the client device corresponding to the physical address in response to detecting that the client device is connected to an IPv4 public address assignment network port, or
assigning the IPv4 private address to the client device corresponding to the physical address in response to not detecting that the client device is connected to the IPv4 public address assignment network port; or
binding a currently acquired IPv6 network prefix to the IPv6 interface identifier to generate an IPv6 address, and assigning the IPv6 address to the client device corresponding to the physical address or the unique device identifier.

6. The network access control method of claim 4, wherein after assigning a client network address to the client device, the method further comprises:
configuring a destination network address translation rule in response to the client network address being the IPv4 private address.

7. The network access control method of claim 1, wherein before receiving a network address application request sent by a client device, the method further comprises:
dialing to a network side and receiving a dynamic network address assigned by the network side;
registering a fixed domain name through a Dynamic Domain Name Server (DDNS) protocol; and
binding the dynamic network address to the fixed domain name.

8. The network access control method of claim 1, wherein after assigning a client network address to the client device, the method further comprises:
recording the client network address on a management page; or
binding the client network address to two-dimensional code information.

9. A Customer Premise Equipment (CPE), comprising: a memory, a processor, and a computer program stored in the memory and executable by the processor, wherein the computer program, when executed by the processor, causes the processor to perform the network access control method of any of claims 1 to 8.

10. A computer-readable storage medium, storing computer-executable instructions which, when executed by a processor, cause the processor to perform the network access control method of any of claims 1 to 8.
